# EUROPÄISCHE PATENTANMELDUNG

(11) **EP 4 674 791 A1**
(43) Veröffentlichungstag der Anmeldung: **07.01.2026**
(21) Anmeldenummer: 25186157.1
(22) Anmeldetag: 30.06.2025
(51) Int. Cl.: B65G 21/18, B65G 47/51, B08B 9/08, B08B 9/20

(54) **FÖRDERSYSTEM MIT WENDELFÖRDERER**

(30) Priorität: 02.07.2024 DE 102024118727
(71) Anmelder: Klotzki Maschinenbau GmbH, 93098 Mintraching (DE)
(72) Erfinder: DEMIRCI, Arif, 93098 Mintraching (DE)
(74) Vertreter: Glück Kritzenberger Patentanwälte PartGmbB

(57) **Zusammenfassung**

Beschrieben wird ein Fördersystem 30 umfassend einen Wendelförderer 1 zum Befördern von Behältnissen 2 entlang einer sich zwischen einem Behältniseinlauf 4 und einem Behältnisauslauf 5 erstreckenden Transportstrecke 3. Die Transportstrecke 3 weist zumindest auf: Eine eine erste Maschinenachse MA1 wendelartig umschließende erste Transportstrecke 3.1, eine eine zweite Maschinenachse MA2 wendelartig umschließende zweite Transportstrecke 3.2 und eine Übergabestrecke 3.3, wobei die Übergabestrecke 3.3 sich zwischen der ersten Transportstrecke 3.1 und der zweiten Transportstrecke 3.2 erstreckt; zumindest einen ersten und einen zweiten Mitnehmer, wobei der erste Mitnehmer 14.1 mit den auf der ersten Transportstrecke anordenbaren Behältnissen und der zweite Mitnehmer 14.2 mit den auf der zweiten Transportstrecke anordenbaren Behältnissen in Wirkverbindung bringbar ist. Das Fördersystem 30 weist außerdem zumindest einen ersten Antrieb 20 zum Befördern von Behältnissen 2 entlang der ersten Transportstrecke 3.1, wobei der erste Mitnehmer 14.1 mittels des ersten Antriebs antreibbar ausgebildet ist, und zumindest einen zweiten Antrieb 21 zum Befördern von Behältnissen 2 entlang der zweiten Transportstrecke 3.2, wobei der zweite Mitnehmer 14.2 mittels des zweiten Antriebs antreibbar ausgebildet ist, auf. Dabei sind der erste Antrieb und der zweite Antrieb unabhängig voneinander betreibbar. Das Fördersystem umfasst außerdem eine erste, im Bereich des Behältniseinlaufs 4 angeordnete Sensoreinrichtung 31 und eine zweite, im Bereich des Behältnisauslaufs 5 angeordnete Sensoreinrichtung. Die Sensoreinrichtungen sind ausgebildet zum Erkennen einer Anzahl und einer Bewegungsrichtung der den Behältniseinlauf bzw. den Behältnisauslauf passierenden Behältnisse, und zum Senden eines Signals, wobei das Signal die erkannte Anzahl und die erkannte Bewegungsrichtung der Behältnisse repräsentiert, sowie eine eine Signalschnittstelle 36 aufweisende Steuereinheit 35. Die Sensoreinrichtungen stehen mit der Signalschnittstelle in Signalverbindung und die Steuereinheit ist dazu ausgebildet, den ersten Antrieb und den zweiten Antrieb unabhängig voneinander, basierend auf den von den Sensoreinrichtungen übermittelten Signalen und basierend auf einem von einer Anlagensteuerung übermittelten Bedarfssignal zu steuern.

## Beschreibung

### Technisches Gebiet

Die Erfindung bezieht sich auf ein Fördersystem mit einem Wendelförderer zum Befördern von Behältnissen und mit zumindest zwei Sensoreinrichtungen.

### Stand der Technik

Wendelförderer sind im Stand der Technik in verschiedenen Ausführungsformen bekannt. Beispielsweise ist aus EP 2 279 803 A1 ein Wendelförderer für Behälter in Form von Transportkästen bekannt, mittels dem Transportkästen entlang einer eine Maschinenachse wendelartig umschließenden Transportstrecke von einem Behältereinlauf zu einem Behälterauslauf befördert werden. Der Behälterauslauf ist dabei vertikal vom Behälterauslauf beabstandet, sodass durch den Wendelförderer eine Höhendifferenz zwischen Behältereinlauf und Behälterauslauf überbrückt wird.

Derartige Wendelförderer können beispielsweise in Vorrichtungen zur Reinigung von Behältnissen eingesetzt werden. Jedoch werden Wendelförderer auch zu anderen Zwecken eingesetzt, beispielsweise in der Fördertechnik, um Höhenunterschiede zwischen Einlauf und Auslauf zu überbrücken. Derartige Wendelförderer werden beispielsweise in der DE 10 2019 129 962 A1, der WO 2020 / 201 101 A1 und der US 2022 / 0 227 585 A1 offenbart.

Werden Wendelförderer zum Befördern von Behältnissen eingesetzt, so ist es in vielen Anwendungen erforderlich, dass am Behältnisauslauf ein kontinuierlicher Förderstrom von Behältnissen bereitgestellt wird, in dem aufeinanderfolgende Behältnisse einen vorher festgelegten Abstand zueinander aufweisen bzw. einander unmittelbar aufeinanderfolgend berühren. Beispielsweise ist dies eine Anforderung bei der Konstruktion von Reinigungsanlagen für Behältnisse, da die gereinigten Behältnisse häufig in einem der Reinigung nachfolgenden Bearbeitungsschritt positionsgenau mit Getränkeaufbewahrungsmitteln, beispielsweise Dosen oder Flaschen, befüllt werden.

Die Zuführung von Behältnissen am Behältniseinlauf eines solchen Wendelförderers erfolgt jedoch häufig nicht zuverlässig in einem kontinuierlichen Förderstrom, in dem die Behältnisse äquidistant beabstandet sind. Auch im Zuge der Beförderung der Behältnisse durch den Wendelförderer ist bei bekannten Lösungen der Abstand benachbarter Behältnisse oft nicht anpassbar, sodass am Behältniseinlauf bestehende Unregelmäßigkeiten in der Beabstandung auch am Behältnisauslauf vorliegen.

Um den Abstand der Behältnisse in einer Anlage zu vergleichmäßigen oder anderen Komponenten einer Anlage zusätzliche Behältnisse bereitzustellen, kommt häufig die sogenannte Linearspeichertechnik zum Einsatz, bei der eine Linearspeichervorrichtung, in der Behältnisse bevorratet werden, parallel zu einem Förderband angeordnet ist. Die Linearspeichervorrichtung wird üblicherweise mittels Greifvorrichtungen bestückt bzw. entleert. Hierbei wird eine festgelegte Zahl an hintereinander angeordneten Behältnissen, beispielsweise 10 oder 15 Behältnisse, von der Greifvorrichtung zangenartig eingeklemmt und zwischen dem Förderband und der Linearspeichervorrichtung hin- und herbewegt. Wenn eine Lücke im Förderstrom der Behältnisse aufgefüllt werden soll, werden Behältnisse aus der Linearspeichervorrichtung entnommen und auf das Förderband gesetzt. Im umgekehrten Fall, wenn der Förderstrom an Behältnissen zu dicht ist, werden mittels der Greifvorrichtung Behältnisse vom Förderband entnommen und in der Linearspeichervorrichtung bevorratet.

Das Vorsehen einer Linearspeichervorrichtung, die diskontinuierlich von einer Greifvorrichtung bestückt wird, bringt einige Nachteile mit sich. So vergrößert eine Linearspeichervorrichtung den Platzbedarf der Anlage, beispielsweise einer Waschstraße für Behältnisse, insbesondere, wenn die Linearspeichervorrichtung in Kombination mit einem Wendelförderer eingesetzt wird. Außerdem kann eine Linearspeichervorrichtung lediglich diskontinuierlich mit Behältnissen bestückt werden, wobei lediglich eine vorgegebene Anzahl an Behältnissen zwischen der Linearspeichervorrichtung und dem entsprechenden Förderband verschoben werden kann, woraus eine geringe Flexibilität eines derartig aufgebauten Systems resultiert. Ein entsprechendes System ist aufgrund des hohen maschinellen Aufwands, der durch die zusätzlich bereitzustellende Greifvorrichtung sowie die Linearspeichervorrichtung entsteht, außerdem kostspielig und fehleranfällig.

Es besteht folglich Bedarf an einer Vorrichtung, die eine zuverlässige, flexible, kostengünstige, möglichst kontinuierlich betreibbare und insbesondere mit kurzer Ansprechzeit reagierende Pufferung von Behältnissen ermöglicht.

### Darstellung der Erfindung

Aufgabe der vorliegenden Erfindung ist es daher, eine Vorrichtung zur Verfügung zu stellen, die eine zuverlässige, flexible, kostengünstige, möglichst kontinuierlich betreibbare und mit kurzer Ansprechzeit reagierende Pufferung von Behältnissen ermöglicht. Diese Aufgabe wird durch das Fördersystem gemäß Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung stellt ein Fördersystem umfassend einen Wendelförderer zum Befördern von Behältnissen entlang einer sich zwischen einem in einer Einlaufebene angeordneten Behältniseinlauf und einem in einer Auslaufebene angeordneten Behältnisauslauf erstreckenden Transportstrecke bereit. Die Transportstrecke weist zumindest auf: Eine eine erste Maschinenachse wendelartig umschließende erste Transportstrecke, wobei die erste Transportstrecke einen ersten Wendeldurchmesser aufweist und die erste Transportstrecke ein erstes Ende und ein dem ersten Ende gegenüberliegendes zweites Ende aufweist; eine eine zweite Maschinenachse wendelartig umschließende zweite Transportstrecke, wobei die zweite Transportstrecke einen zweiten Wendeldurchmesser aufweist und die zweite Transportstrecke ein erstes Ende und ein dem ersten Ende gegenüberliegendes zweites Ende aufweist, wobei die zweite Maschinenachse zur ersten Maschinenachse im Wesentlichen parallel ausgerichtet ist; eine Übergabestrecke, wobei die Übergabestrecke sich zwischen der ersten Transportstrecke und der zweiten Transportstrecke erstreckt; zumindest einen ersten Mitnehmer, wobei der erste Mitnehmer mit den auf der ersten Transportstrecke anordenbaren Behältnissen in Wirkverbindung bringbar ist; zumindest einen zweiten Mitnehmer, wobei der zweite Mitnehmer mit den auf der zweiten Transportstrecke anordenbaren Behältnissen in Wirkverbindung bringbar ist.

Die erste Transportstrecke weist zumindest eine bezogen auf die erste Maschinenachse innenliegende Behältnisführung und zumindest eine bezogen auf die erste Maschinenachse außenliegende Behältnisführung auf. Die zweite Transportstrecke weist zumindest eine bezogen auf die zweite Maschinenachse innenliegende Behältnisführung und zumindest eine bezogen auf die zweite Maschinenachse außenliegende Behältnisführung auf. Der erste Mitnehmer durchgreift die erste Transportstrecke und der zweite Mitnehmer durchgreift die zweite Transportstrecke zwischen den jeweiligen Behältnisführungen.

Die Transportstrecke weist außerdem zumindest einen ersten Antrieb zum Befördern von Behältnissen entlang der ersten Transportstrecke, wobei der erste Mitnehmer mittels des ersten Antriebs antreibbar ausgebildet ist, und zumindest einen zweiten Antrieb zum Befördern von Behältnissen entlang der zweiten Transportstrecke, wobei der zweite Mitnehmer mittels des zweiten Antriebs antreibbar ausgebildet ist, auf. Dabei sind der erste Antrieb und der zweite Antrieb unabhängig voneinander betreibbar.

Das Fördersystem weist außerdem eine erste, im Bereich des Behältniseinlaufs angeordnete Sensoreinrichtung auf, wobei die erste Sensoreinrichtung ausgebildet ist zum Erkennen einer Anzahl und einer Bewegungsrichtung der den Behältniseinlauf passierenden Behältnisse, und zum Senden eines Signals, wobei das Signal die erkannte Anzahl und die erkannte Bewegungsrichtung der den Behältniseinlauf passierenden Behältnisse repräsentiert. Daneben umfasst das Fördersystem eine zweite, im Bereich des Behältnisauslaufs angeordnete Sensoreinrichtung, wobei die zweite Sensoreinrichtung ausgebildet ist zum Erkennen einer Anzahl und einer Bewegungsrichtung der den Behältnisauslauf passierenden Behältnisse, und zum Senden eines Signals, wobei das Signal die erkannte Anzahl und die erkannte Bewegungsrichtung der den Behältnisauslauf passierenden Behältnisse repräsentiert. Schließlich weist das Fördersystem eine eine Signalschnittstelle aufweisende Steuereinheit auf, wobei die erste Sensoreinrichtung und die zweite Sensoreinrichtung mit der Signalschnittstelle in Signalverbindung steht und die Steuereinheit dazu ausgebildet ist, den ersten Antrieb und den zweiten Antrieb unabhängig voneinander, basierend auf dem von der ersten Sensoreinrichtung und der zweiten Sensoreinrichtung übermittelten Signal und basierend auf einem von einer Anlagensteuerung übermittelten Bedarfssignal zu steuern.

Der von dem erfindungsgemäßen Fördersystem umfasste Wendelförderer ist für vielfältige Formen und Größen von Behältnissen einsetzbar. Beispielsweise können die zu befördernden Behältnisse quaderförmig ausgebildet sein, insbesondere können mittels des zu Verfügung gestellten Wendelförderers Behältnisse in Form von Gebinden, Getränkekästen oder Wannen befördert werden. Bei den von dem Wendelförderer beförderten Behältnissen kann es sich auch um klappbare Behältnisse handeln, wie sie häufig für den Transport und die Aufbewahrung von Lebensmitteln, insbesondere Fleisch, Obst, Gemüse und Backwaren, zum Einsatz kommen. Bei den Behältnissen kann es sich insbesondere um Behältnisse zur Lagerung und zum Transport von Lebensmitteln wie Fleisch, Obst, Gemüse und Backwaren, insbesondere Fleischerkisten, insbesondere Kisten der Größen E1, E2 und E3, handeln.

Die Anordnung der Einlaufebene und der Auslaufebene kann entsprechend der Anforderungen an einen Wendelförderer gewählt werden. Insbesondere kann die Einlaufebene parallel zur Auslaufebene ausgerichtet sein und gleich weit von einem Untergrund beabstandet sein wie die Auslaufebene. In diesem Fall sind die Einlaufebene und die Auslaufebene also identisch, was bevorzugt ist, wenn der zur Verfügung gestellte Wendelförderer bestehende Pufferlösungen, beispielsweise Linearspeichervorrichtungen, die in eine Fertigungsstraße oder in eine Produktionslinie integriert sind, ersetzt. Jedoch können die Einlaufebene und die Auslaufebene auch unterschiedlich orientiert oder mit unterschiedlichem Abstand zum Untergrund angeordnet sein, beispielsweise, wenn die beförderten Behältnisse beim Durchlaufen des Wendelförderers eine Höhendifferenz überbrücken sollen.

Der Behältniseinlauf und der Behältnisauslauf können an beliebigen Seitenflächen eines Wendelförderers angeordnet sein. Beispielsweise können der Behältniseinlauf und der Behältnisauslauf an der gleichen, an benachbarten oder an gegenüberliegenden Seitenflächen angeordnet sein.

Zum Transport der Behältnisse durch die erste Transportstrecke ist ein erster Antrieb vorgesehen, der dazu ausgebildet ist, den ersten Mitnehmer anzutreiben, welcher in Wirkverbindung mit den Behältnissen tritt, sobald die Behältnisse den Behältniseinlauf passiert haben. Die Behältnisse werden so entlang der ersten Transportstrecke bis zur Übergabestrecke bewegt.

Der zweite Antrieb ist dazu ausgebildet den zweiten Mitnehmer anzutreiben, welcher in Wirkverbindung mit den Behältnissen tritt und die Behältnisse entlang der zweiten Transportstrecke, d.h. von der Übergabestrecke zum Behältnisauslauf befördert.

Der erste und der zweite Antrieb, sind unabhängig voneinander betreib- bzw. antreibbar, können also zu unterschiedlichen Zeiten betrieben werden und/oder mit unterschiedlichen Geschwindigkeiten und/oder mit unterschiedlichen Kräften bzw. Drehmomenten. In anderen Worten kann die Bewegung, die durch den ersten Antrieb verursacht wird, von der Bewegung, die durch den zweiten Antrieb verursacht wird, zumindest zeitweise mechanisch entkoppelt sein. Zu diesem Zweck kann zur Ansteuerung eines jeden Antriebs eine dezidierte Antriebssteuerung bereitgestellt sein.

Der Wendelförderer des erfindungsgemäßen Fördersystems weist zumindest einen ersten Mitnehmer auf, wobei der erste Mitnehmer mit den auf der ersten Transportstrecke anordenbaren Behältnissen in Wirkverbindung bringbar ist. Der Wendelförderer weist ferner zumindest einen zweiten Mitnehmer auf, wobei der zweite Mitnehmer mit den auf der zweiten Transportstrecke anordenbaren Behältnissen in Wirkverbindung bringbar ist. Der erste Mitnehmer kann mittels des ersten Antriebs und der zweite Mitnehmer kann mittels des zweiten Antriebs unabhängig voneinander angetrieben werden. Folglich können die Behältnisse in der ersten Transportstrecke mittels des ersten Mitnehmers unabhängig von den Behältnissen in der zweiten Transportstrecke befördert werden, wobei die Behältnisse in der zweiten Transportstrecke mittels des zweiten Mitnehmers befördert werden.

Insbesondere ist es in besonders einfacher Weise möglich, den ersten und den zweiten Mitnehmer in unterschiedlicher Drehrichtung zu betreiben. Es ist also nicht alleine möglich, die Behältnisse entlang der ersten Transportstrecke in Richtung der ersten Maschinenachse zu bewegen, sondern auch in dazu entgegengesetzter Richtung. Analog können die Behältnisse entlang der zweiten Transportstrecke in Richtung der zweiten Maschinenachse wie auch in dazu entgegengesetzter Richtung bewegt werden.

Die Mitnehmer können sich bevorzugt im Wesentlichen parallel zur ersten und/oder zweiten Maschinenachse erstrecken. Bevorzugt erstrecken sich die Mitnehmer im Wesentlichen entlang der gesamten Ausdehnung der inneren Transportstrecke und/oder der äußeren Transportstrecke parallel zur Maschinenachse. Somit können durch einen Mitnehmer mehrere Behältnisse, die sich jeweils um eine Windung der Transportstrecke versetzt zueinander, d.h. in Richtung der Maschinenachse gesehen übereinander oder untereinander, befinden, gleichzeitig mit demselben Mitnehmer in Wirkverbindung gebracht werden und von diesem bewegt werden.

Somit kann durch einen einzelnen Mitnehmer ein effizienter Vorschub von mehreren Behältnissen erfolgen, wobei die Position der beförderten Behältnisse in den Windungen der Transportstrecke genau vorgebbar ist.

Durch das Vorsehen eines ersten Antriebs und eines zweiten Antriebs, die unabhängig voneinander betreibbar sind, sind die mit dem ersten Mitnehmer in Wirkverbindung stehenden Behältnisse während des Beförderungsvorgangs durch die erste Transportstrecke unabhängig von den Behältnissen in der zweiten Transportstrecke bewegbar und umgekehrt.

Besondere Vorteile des Fördersystems gemäß der vorliegenden Erfindung liegen darin, dass der erste Antrieb zum Befördern von Behältnissen entlang der ersten Transportstrecke und der zweite Antrieb zum Befördern von Behältnissen entlang der zweiten Transportstrecke unabhängig voneinander betrieben werden können. Da der erste Mitnehmer mittels des ersten Antriebs antreibbar ausgebildet ist und der zweite Mitnehmer mittels des zweiten Antriebs antreibbar ausgebildet ist, können die beiden Mitnehmer sowohl mit unterschiedlicher Geschwindigkeit wie auch in unterschiedlicher Drehrichtung betrieben werden. Die Behältnisse können somit entlang der ersten und der zweiten Transportstrecke entlang der jeweiligen Maschinenachse in gleicher Richtung wie auch in unterschiedlicher Richtung bewegt werden. Außerdem können der erste und der zweite Mitnehmer auf einfache Weise in gleicher oder in zueinander entgegengesetzter Drehrichtung betrieben werden.

Daraus folgt für den Fachmann unmittelbar, dass die Bezeichnungen "Einlaufebene", "Behältniseinlauf", "Auslaufebene" und "Behältnisauslauf" lediglich zur einfacheren und übersichtlicheren Beschreibung der Erfindung gewählte Begriffe darstellen. Sowohl "Behältniseinlauf" wie auch "Behältnisauslauf" können der Zufuhr von Behältnissen zu der jeweiligen Transportstrecke dienen wie auch der Abfuhr der Behältnisse aus dem Fördersystem. Der Behältniseinlauf kann also, je nach Drehrichtung des entsprechenden Mitnehmers, auch als Behältnisauslauf fungieren und umgekehrt. Es kann also auch der Behältniseinlauf in der Behältnisauslaufebene angeordnet sein und ebenso kann sich der Behältnisauslauf in der Behältniseinlaufebene befinden.

Aufgrund der Tatsache, dass der erste und der zweite Mitnehmer unabhängig voneinander in gleicher oder in zueinander entgegengesetzter Drehrichtung betrieben werden können, folgt außerdem, dass gleichzeitig der Behältniseinlauf wie auch der Behältnisauslauf beide als Behältniseinläufe fungieren können. Dies ist insbesondere dann von Vorteil, wenn eine größere Zahl an Behältnissen in kurzer Zeit dem als Puffer fungierenden Wendelförderer zugeführt werden müssen.

Umgekehrt können auch gleichzeitig der Behältniseinlauf wie auch der Behältnisauslauf beide als Behältnisausläufe fungieren. Dies ist insbesondere dann von Vorteil, wenn eine größere Zahl an Behältnissen in kurzer Zeit aus dem als Puffer fungierenden Wendelförderer abgeführt werden muss.

Das erfindungsgemäße Fördersystem weist neben einem Wendelförderer zumindest eine erste, im Bereich des Behältniseinlaufs angeordnete Sensoreinrichtung und zumindest eine zweite, im Bereich des Behältnisauslaufs angeordnete Sensoreinrichtung auf. Dabei ist die erste Sensoreinrichtung zum Erkennen einer Anzahl und einer Bewegungsrichtung der den Behältniseinlauf passierenden Behältnisse, und zum Senden eines Signals, wobei das Signal die erkannte Anzahl und die erkannte Bewegungsrichtung der den Behältniseinlauf passierenden Behältnisse repräsentiert, ausgebildet. Die zweite Sensoreinrichtung ist zum Erkennen einer Anzahl und einer Bewegungsrichtung der den Behältnisauslauf passierenden Behältnisse, und zum Senden eines Signals, wobei das Signal die erkannte Anzahl und die erkannte Bewegungsrichtung der den Behältnisauslauf passierenden Behältnisse repräsentiert, ausgebildet. Schließlich weist das Fördersystem eine eine Signalschnittstelle aufweisende Steuereinheit auf, wobei die erste Sensoreinrichtung und die zweite Sensoreinrichtung mit der Signalschnittstelle in Signalverbindung steht und die Steuereinheit dazu ausgebildet ist, den ersten Antrieb und den zweiten Antrieb unabhängig voneinander, basierend auf dem von der ersten Sensoreinrichtung und der zweiten Sensoreinrichtung übermittelten Signal und basierend auf einem von einer Anlagensteuerung übermittelten Bedarfssignal zu steuern.

Bei den von der ersten und der zweiten Sensoreinrichtung an die Signalschnittstelle gesendeten Signale kann es sich beispielsweise um Analogsignale handeln, welche die Anzahl und die Bewegungsrichtung der Behältnisse angibt, die den Behältniseinlauf bzw. den Behältnisauslauf passieren.

Das Fördersystem weist ferner zumindest eine eine Signalschnittstelle aufweisende Steuereinheit auf. Die erste und die zweite Sensoreinrichtung stehen mit der Signalschnittstelle der Steuereinheit in Signalverbindung. Die Steuereinheit ist dazu ausgebildet, den ersten Antrieb und den zweiten Antrieb basierend auf dem von der ersten und der zweiten Sensoreinrichtung übermittelten Signal und basierend auf einem von einer Anlagensteuerung übermittelten Bedarfssignal unabhängig voneinander zu steuern.

Das erfindungsgemäße Fördersystem kombiniert einen Wendelförderer, der zwei wendelartig ausgebildete Transportstrecken, zwei die jeweilige Transportstrecke durchgreifende Mitnehmer und zwei unabhängig voneinander betreibbare Antriebe der Mitnehmer aufweist, mit zwei am Behältniseinlauf bzw. am Behältnisauslauf angeordneten Sensoreinheiten, die über eine Signalschnittstelle mit einer Steuereinheit in Verbindung stehen. Da die beiden Mitnehmer mittels der beiden Antriebe unabhängig voneinander angetrieben werden können und die beiden Mitnehmer auch in unterschiedlicher Drehrichtung betrieben werden können, kann das Fördersystem mit einer extremen Flexibilität und geringer Ansprechzeit auf Bedarfsanforderungen reagieren.

Wird beispielsweise von einem beliebigen Punkt der Produktionslinie eine Störung an das Steuersystem gemeldet, welche einen unmittelbaren Stopp der Zufuhr von Behältnissen erfordert, so kann das Fördersystem sofort durch einen Betrieb der beiden Mitnehmer in gleicher Drehrichtung derart reagieren, dass sowohl Behältniseinlauf wie auch Behältnisauslauf als Behältniseinläufe fungieren. Auf diese Weise werden Behältnisse in großer Anzahl sofort den beiden Transportstrecken gleichzeitigt zugeführt und dort gepuffert.

Umgekehrt kann das Fördersystem auch durch einen Betrieb der beiden Mitnehmer in gleicher Drehrichtung derart reagieren, dass sowohl Behältniseinlauf wie auch Behältnisauslauf als Behältnisausläufe fungieren. Auf diese Weise werden Behältnisse in großer Anzahl sofort aus dem Fördersystem an die Produktionslinie übergeben, wenn an die Steuereinheit eine entsprechende Bedarfsanforderung übermittelt wird.

Im Sinne der Erfindung umschließen die erste Transportstrecke und die zweite Transportstrecke die jeweilige Maschinenachse wendelartig, d.h. die erste Transportstrecke und die zweite Transportstrecke bilden eine Kurve aus, die sich um die Mantelfläche eines gedachten Zylinders windet, dessen Rotationsachse die jeweilige Maschinenachse ist. Die Ganghöhe einer Transportstrecke ist dabei diejenige Strecke, um die sich die Transportstrecke bei einer vollständigen Umdrehung der Transportstrecke um die jeweilige Maschinenachse in Richtung der Maschinenachse windet.

Wickelt man den Zylindermantel, entlang dessen sich die Transportstrecke windet, in eine Ebene ab, so bildet die Transportstrecke eine Kurve in dieser Ebene aus. Die Steigung, die die Transportstrecke in dieser Ebene aufweist, wird als Steigung der Transportstrecke bezeichnet. Bevorzugt weisen die erste Transportstrecke und die zweite Transportstrecke eine konstante Steigung auf, jedoch können auch einzelne Abschnitte der Wendel steiler oder flacher ausgeführt sein, beispielsweise, wenn die Wendel geometrischen Restriktionen unterliegen, die durch den Aufstellort eines Wendelförderers und/oder Apparaturen, die an oder in der Nähe eines Wendelförderers installiert sind, vorgegeben werden.

Der erste Wendeldurchmesser bzw. der zweite Wendeldurchmesser entspricht dem Durchmesser des von der jeweiligen Transportstrecke umschlossenen Zylinders.

Die Windungsrichtung der ersten Transportstrecke und der zweiten Transportstrecke ist beliebig, insbesondere können die erste und die zweite Transportstrecke dieselbe Windungsrichtung aufweisen, wodurch beispielsweise die Auslegung und Fertigung der Transportstrecken standardisiert und damit vereinfacht wird. Alternativ können die erste und die zweite Transportstrecke aber auch verschiedene Windungsrichtungen aufweisen.

Die Transportstrecke ist von der Übergabestrecke in zwei Elemente geteilt, die als "erste" Transportstrecke und als "zweite" Transportstrecke bezeichnet werden. Die Bezeichnung "erste" Transportstrecke und "zweite" Transportstrecke dient im Rahmen der vorliegenden Offenbarung lediglich der Unterscheidung verschiedener Elemente der Transportstrecke voneinander, und stellt insbesondere keine Angabe bezüglich der Reihenfolge dar, in der die Transportstrecken von den Behältnissen durchlaufen werden.

Beispielsweise kann der Wendelföderer dadurch gekennzeichnet sein, dass das erste Ende der ersten Transportstrecke am Behältniseinlauf angeordnet ist und das zweite Ende der zweiten Transportstrecke am Behältnisauslauf angeordnet ist und die Übergabestrecke sich zwischen dem zweiten Ende der ersten Transportstrecke und dem ersten Ende der zweiten Transportstrecke erstreckt. In dieser Konfiguration des Wendelförderers passieren die durch den Wendelförderer beförderten Behältnisse zunächst den Behältniseinlauf, anschließend erfolgt ein Transport entlang der ersten Transportstrecke, entlang der Übergabestrecke und in der Folge entlang der zweiten Transportstrecke. Abschließend werden die Behältnisse am Behältnisauslauf zum Weitertransport bereitgestellt.

Jedoch kann in einer alternativen Ausführungsform der Weg, den die Behältnisse beim Befördern durch den Wendelförderer zurücklegen, beispielsweise vom Behältniseinlauf entlang der zweiten Transportstrecke über die Übergabestrecke und entlang der ersten Transportstrecke führen, sodass die Behältnisse dann am Behältnisauslauf bereitstellbar sind. In dieser - im Vergleich zur vorhergenannten - umgekehrten Konfiguration des Wendelförderers ist der Wendelföderer also dadurch gekennzeichnet, dass das erste Ende der zweiten Transportstrecke am Behältniseinlauf angeordnet ist und das zweite Ende der ersten Transportstrecke am Behältnisauslauf angeordnet ist und die Übergabestrecke sich zwischen dem zweiten Ende der zweiten Transportstrecke und dem ersten Ende der ersten Transportstrecke erstreckt.

Aufgrund der frei wählbaren Drehrichtung der Mitnehmer müssen die Behältnisse aber nicht die gesamte Transportstrecke durchlaufen. Die Behältnisse können beispielsweise der Produktionslinie entnommen werden, der ersten Transportstrecke zugeführt und dort zur Pufferung gelagert werden. Durch eine Umkehrung der Drehrichtung des entsprechenden Mitnehmers können diese Behältnisse von der ersten Transportstrecke wieder direkt an die Produktionslinie übergeben werden. Gleiches gilt für die zweite Transportstrecke.

Auch die Windungsrichtung der ersten Transportstrecke und der zweiten Transportstrecke sind frei konfigurierbar. Beispielsweise kann die erste Transportstrecke eine rechtsgängige Windung aufweisen und die zweite Transportstrecke eine linksgängige Windung aufweisen, oder umgekehrt. Ebenso können bei entsprechender Ausgestaltung der Übergabestrecke beide Transportstrecken die gleiche Windungsrichtung aufweisen.

Der erste Antrieb und der zweite Antrieb können bevorzugt derart ansteuerbar sein, dass, in Reaktion auf ein Bedarfssignal einer Anlagensteuerung, am Behältnisauslauf ein kontinuierlicher Strom an Behältnissen bereitgestellt wird. Hierfür kann es beispielsweise vorgesehen sein, dass die Antriebe derart ansteuerbar sind, dass die zwischen Übergabestrecke und Behältnisauslauf angeordnete Transportstrecke möglichst mit Behältnissen gefüllt ist.

In einer bevorzugten Ausführungsform kann der Wendelföderer des erfindungsgemäßen Fördersystems zusätzlich zum ersten Antrieb und zum zweiten Antrieb einen dritten Antrieb zum Befördern von Behältnissen entlang der Übergabestrecke aufweisen, der weiter bevorzugt unabhängig vom ersten Antrieb und vom zweiten Antrieb betreibbar ist.

Die konkrete Ausgestaltung der Antriebe ist frei wählbar. Genauer gesagt ist die Ausgestaltung eines jeden Antriebs individuell wählbar, sodass der erste Antrieb unterschiedlich zum zweiten Antrieb ausgestaltet sein kann. Auch ein eventuell vorhandener dritter Antrieb kann unterschiedlich zu den übrigen Antrieben ausgestaltet sein.

Durch das unabhängige Betreiben des ersten und des zweiten Antriebs kann beispielsweise die Taktung von Behältnissen zwischen dem Behältniseinlauf und dem Behältnisauslauf verändert werden und/oder der Strom der am Behältniseinlauf ankommenden Behältnisse vergleichmäßigt werden. Auch können die Antriebe unabhängig voneinander angesteuert werden, um am Behältnisauslauf einen kontinuierlichen Strom gepufferter Behältnisse bereitzustellen.

Hierfür können, in einer lediglich beispielhaften Konfiguration der Transportstrecke, Behältnisse entlang der ersten Transportstrecke durch den ersten Antrieb zur Übergabestrecke gefördert werden. In der Übergabestrecke kann ein Puffern von Behältnissen erfolgen, insbesondere können die Behältnisse vom ersten Antrieb derart in die Übergabestrecke geschoben oder eingeleitet werden, dass sie unmittelbar hintereinander in der Übergabestrecke angeordnet sind. In dieser Anordnung können die Behältnisse vom zweiten Antrieb, der beispielsweise nur dann betrieben wird, wenn ausreichend Behältnisse in der Übergabestrecke vorhanden sind, oder wenn ein Signal einer Anlagensteuerung das Bereitstellen von Behältnissen am Behältnisauslauf fordert, zum Behältnisauslauf transportiert werden.

Bevorzugt ist die zweite Transportstrecke dabei möglichst immer vollständig mit Behältnisse gefüllt, sodass ein lückenfreies Bereitstellen der Behältnisse am Behältnisauslauf erfolgen kann. Zum Auffüllen von leeren Stellen in der zweiten Transportstrecke können beispielsweise Behältnisse vom ersten Antrieb durch die Übergabestrecke in die zweite Transportstrecke geschoben werden.

Bevorzugt kann der Wendelförderer des Fördersystems mehrere erste und/oder mehrere zweite Mitnehmer aufweisen, insbesondere können die Mitnehmer äquidistant entlang des Wendelumfangs der ersten Transportstrecke und/oder entlang des Wendelumfangs der zweiten Transportstrecke verteilt sein. In einer bevorzugten Ausführungsform kann der Abstand zwischen benachbarten Mitnehmern im Wesentlichen den Abmessungen der zu befördernden Behältnisse entsprechen bzw. etwas größer als die Abmessungen der zu befördernden Behältnisse sein, sodass die Behältnisse, die in der ersten und/oder in der zweiten Transportstrecke befördert werden, einzeln von jeweils einem ersten bzw. zweiten Mitnehmer in Wendelrichtung bewegt werden. Beispielsweise kann der Wendelförderer 6 gleichmäßig über den Umfang verteilte erste Mitnehmer und 12 gleichmäßig über den Umfang verteilte zweite Mitnehmer aufweisen oder umgekehrt.

Die Mitnehmer können, wie im eben beschriebenen Fall unmittelbar mit den Behältnissen in Wirkverbindung treten oder sie können Mitnehmerelemente, insbesondere Mitnehmerfinger, aufweisen, um mit den Behältnissen in Wirkverbindung zu treten.

Bevorzugt kann der erste Mitnehmer und/oder der zweite Mitnehmer jeweils an zumindest einem, insbesondere an zumindest zwei einander in Längsrichtung der Maschinenachse gegenüberliegenden, um die Maschinenachse drehbaren Mitnehmertragelementen ausgebildet ist. Bevorzugt erfolgt die Abstützung der Mitnehmer durch die Mitnehmertragelemente also, in Längsrichtung der jeweiligen Maschinenachse betrachtet, beidseitig und außerhalb des Bereichs, entlang dem die Mitnehmer mit Behältnissen in Wirkverbindung treten.

So wird eine besonders stabile Führung der Mitnehmer ermöglicht und es erfolgt eine gleichmäßige Lastverteilung in den Mitnehmern. Außerdem sind die auftretenden Biegemomente durch die beidseitige Abstützung im Vergleich zu einer einseitigen Abstützung verringert. Zusätzlich wird ein Verkanten der Mitnehmer verhindert und die Langlebigkeit des Wendelförderers verbessert, weil Schäden durch Materialermüdung reduziert werden. Bei ringförmiger Ausführung der Mitnehmertragelemente besteht außerdem eine gute Zugänglichkeit zum Wendelinnenraum, beispielsweise um dort Apparaturen zum Steuern des Wendelförderers, (Mess-)instrumente oder andere Arbeitsvorrichtungen anzuordnen.

Die erste Transportstrecke weist zumindest eine bezogen auf die erste Maschinenachse innenliegende Behältnisführung sowie zumindest eine bezogen auf die erste Maschinenachse außenliegende Behältnisführung auf. Die zweite Transportstrecke weist entsprechend zumindest eine bezogen auf die zweite Maschinenachse innenliegende Behältnisführung sowie zumindest eine bezogen auf die zweite Maschinenachse außenliegende Behältnisführung auf. Dies bringt den Vorteil mit sich, dass durch die innenliegende und die außenliegenden Behältnisführungen eine besonders genaue Führung der Behältnisse möglich ist. Außerdem kann der Wendelförderer so gestaltet werden, dass die Behältnisse während des Beförderungsvorgangs entlang der Transportstrecke auch an ihrer Unterseite zugänglich sind. Dies ermöglicht beispielsweise ein Waschen und/oder Trockenen der Behältnisse von allen Seiten, wobei dafür eingesetztes Wasser nach unten ablaufen kann.

Der erste Mitnehmer durchgreift die erste Transportstrecke und der zweite Mitnehmer durchgreift die zweite Transportstrecke zwischen den jeweiligen Behältnisführungen, was zu einem besonders einfachen Aufbau des als Bestandteil des erfindungsgemäßen Fördersystems verwendeten Wendelförderers führt.

In einer bevorzugten Ausführungsform ist die erste Maschinenachse zur zweiten Maschinenachse parallelverschoben. Insbesondere kann der Abstand zwischen der ersten Maschinenachse und der zweiten Maschinenachse zumindest gleich der Summe aus dem halben ersten Wendeldurchmesser der ersten Transportstrecke, d.h. dem Wendelradius der ersten Transportstrecke, und dem halben zweiten Wendeldurchmesser der zweiten Transportstrecke, d.h. dem Wendelradius der zweiten Transportstrecke, sein.

In dieser Ausführungsform können die erste wendelartige Transportstrecke und die zweite wendelartige Transportstrecke also nebeneinanderliegend angeordnet sein, was den Vorteil eines besonders einfachen Aufbaus mit sich bringt. Die Distanz zwischen dem zweiten Ende der ersten Transportstrecke und dem ersten Ende der zweiten Transportstrecke wird durch die Übergabestrecke überbrückt, die in dieser Ausführungsform beispielsweise geradlinig und damit besonders einfach ausgestaltet sein kann. Gleichzeitig ist der Wendelförderer durch die hohe Aufnahmekapazität der wendelartig ausgebildeten ersten und zweiten Transportstrecke im Vergleich zu bekannten lediglich linear operierenden Systemen platzsparend.

In einer alternativen bevorzugten Ausführungsform können die erste Maschinenachse und die zweite Maschinenachse eine gemeinsamen Maschinenachse ausbilden. In diesem Fall weisen die erste Transportstrecke und die zweite Transportstrecke unterschiedliche Wendeldurchmesser auf, insbesondere kann die erste Transportstrecke einen ersten Wendeldurchmesser aufweisen und die zweite Transportstrecke einen zweiten Wendeldurchmesser aufweisen, wobei der erste Wendeldurchmesser kleiner als der zweite Wendeldurchmesser ist, sodass die erste Transportstrecke und die zweite Transportstrecke bezogen auf die gemeinsame Maschinenachse in radialer Richtung versetzt zueinander angeordnet sind.

Folglich kann entweder die erste Transportstrecke oder die zweite Transportstrecke innerhalb der jeweils anderen Transportstrecke angeordnet sein. So wird eine besonders platzsparende Konstruktion des Wendelförderers geschaffen.

Beispielsweise kann gemäß einer bevorzugten Ausführungsform die erste Transportstrecke als innere Transportstrecke und die zweite Transportstrecke als äußere Transportstrecke ausgebildet sein. Folglich können die Behältnisse zunächst in der inneren, ersten Transportstrecke zur Übergabestrecke und anschließend in der zweiten, äußeren Transportstrecke von der Übergabestrecke zum Behältnisauslauf befördert werden.

In beiden Fällen, also sowohl in dem Fall, dass die erste Maschinenachse zur zweiten Maschinenachse parallelverschoben ist, als auch in dem Fall, dass die erste Maschinenachse und die zweite Maschinenachse eine gemeinsame Maschinenachse bilden, kann grundsätzlich eine beliebige Anzahl an Wendelfördern in Kombination in einem Fördersystem eingesetzt werden. Die erwünschte Pufferwirkung wird auf diese Weise immer weiter gesteigert. Bei Kombination mehrerer Wendelförderer werden die Behältnisse über entsprechend ausgebildete Übergabestrecken von einem Wendelförderer zum nächsten Wendelförderer übergeben.

Ebenso kann die Transportstrecke eines einzelnen Wendelförderers grundsätzlich mehr Elemente als die oben genannte erste Transportstrecke, die oben genannte zweite Transportstrecke und die oben genannte Übergabestrecke aufweisen. Beispielsweise kann die Transportstrecke des Wendelförderers eine erste Transportstrecke, eine zweite Transportstrecke und eine dritte Transportstrecke aufweisen, die jeweils eine zugehörige erste, zweite bzw. dritte Maschinenachse wendelartig umschließen. Die Transportstrecken können jeweils mit einem zugehörigen ersten, zweiten bzw. dritten Antrieb ausgestattet sein und mittels entsprechend ausgebildeter Übergabestrecken verbunden sein.

Im Falle, dass die erste Maschinenachse und die zweite Maschinenachse in Form einer gemeinsamen Maschinenachse ausgebildet sind, kann bevorzugt die außenliegende Behältnisführung der ersten Transportstrecke, d.h. der Transportstrecke mit dem kleineren Wendeldurchmesser, der innenliegenden Behältnisführung der zweiten Transportstrecke, d.h. der Transportstrecke mit dem größeren Wendeldurchmesser, entsprechen. Das Vorsehen einer mittigen, "geteilten" Behältnisführung ermöglicht Materialeinsparungen, wodurch die Kosten eines bereitgestellten Wendelförderers reduziert werden.

Aufgrund der eben erläuterten geometrischen Gegebenheiten wird von den Behältnissen beim Durchlaufen der innenliegenden ersten Transportstrecke eine kürzere Strecke zurückgelegt als beim Durchlaufen der äußeren zweiten Transportstrecke. In der äußeren Transportstrecke können aufgrund der größeren Länge mehr Behältnisse als in der inneren Wendel bevorratet werden, sodass die Pufferung der Behältnisse näher am Behältnisauslauf erfolgt. Folglich können die Behältnisse schneller, d.h. mit kürzerer Reaktionszeit auf ein Signal einer Anlagensteuerung, am Behältnisauslauf bereitgestellt werden.

Auch im umgekehrten Fall, also bei Anordnung der zweiten Transportstrecke innenliegend bezüglich der ersten Transportstrecke, d.h. in dem Fall, dass der zweite Wendeldurchmesser kleiner als der erste Wendeldurchmesser ist, kann eine geteilte Behältnisführung vorgesehen sein. In diesem Fall entspricht die außenliegende Behältnisführung der zweiten Transportstrecke der innenliegenden Behältnisführung der ersten Transportstrecke.

In einer bevorzugten Ausführungsform erstreckt sich die Übergabestrecke bezogen auf die erste Maschinenachse und/oder bezogen auf die zweite Maschinenachse zumindest teilweise in radialer Richtung. Die Übergabestrecke dient in diesem Fall der Überbrückung der Differenz der Wendeldurchmesser zwischen dem kleineren Wendeldurchmesser der bezogen auf die Maschinenachse radial innenliegenden Transportstrecke und dem größeren Wendeldurchmesser der bezogen auf die Maschinenachse radial außenliegenden Transportstrecke.

Dabei ist die Übergabestrecke nicht zwangsläufig um die erste und/oder zweite Maschinenachse gekrümmt, sondern kann linear verlaufen oder um einen an anderer Stelle angeordneten Krümmungsmittelpunkt gekrümmt sein. Die Übergabestrecke ermöglicht in dieser Ausgestaltung somit ein platzsparendes Überführen der Behältnisse von der ersten zur zweiten Transportstrecke oder umgekehrt. Gleichzeitig bewirkt die Übergabestrecke einen zusätzlichen Puffereffekt zwischen der ersten und zweiten Transportstrecke und kann, wie im Folgenden näher ausgeführt ist, eine Umkehr der Beförderungsrichtung der Kisten zwischen den Transportstrecken bewirken, indem sie eine Art 180°-Kurve für die Behältnisse ausbildet.

Bevorzugt kann sich die Übergabestrecke bezogen auf die Maschinenachse radial innerhalb eines von der außenliegenden Behältnisführung der zweiten Transportstrecke, d.h. der Transportstrecke mit größerem Wendeldurchmesser, definierten Zylindermantels erstrecken. Der Wendelförderer ist in diesem Fall besonders platzsparend ausgebildet und auch unter beengten Verhältnissen einsetzbar, beispielsweise im Zusammenhang mit einer Wasch- oder Abfüllanlage.

Dementsprechend bewegen sich die Behältnisse beispielsweise zunächst auf einer Wendelbahn mit dem kleineren ersten Wendeldurchmesser der ersten Transportstrecke, anschließend werden die Behältnisse entlang der Übergabestrecke auf die Wendelbahn der zweiten Transportstrecke überführt, die einen größeren zweiten Wendeldurchmesser aufweist. Die Übergabestrecke kann beispielsweise in Form eines einfachen Leitblechs ausgestaltet sein. Alternativ kann zumindest ein Teil der Übergabestrecke in Form einer 180°-Kurve ausgebildet sein.

In einer bevorzugten Ausführungsform erstreckt sich die Übergabestrecke bezogen auf die Maschinenachse zumindest teilweise radial außerhalb eines von der außenliegenden Behältnisführung der zweiten Transportstrecke, d.h. der Transportstrecke mit größerem Wendeldurchmesser, definierten Zylindermantels. In diesem Fall können weder der erste Mitnehmer noch der zweite Mitnehmer entlang der Übergabestrecke mit den zu befördernden Behältnissen in Wirkverbindung bringbar sein.

In vorteilhafter Weise kann die Geometrie der Übergabestrecke in dieser Ausführungsvariante sehr frei ausgestaltet werden, weil die Übergabestrecke zum Großteil radial außerhalb der ersten und zweiten Transportstrecke verlaufen kann. Insbesondere ist es nicht erforderlich, dass in dem Teil der Übergabestrecke, der außerhalb der außenliegenden Transportstrecke angeordnet ist, Mitnehmer die Übergabestrecke passieren. Insofern muss die Übergabestrecke in diesem Außenbereich nicht unterbrochen sein, damit Mitnehmer passieren können, wie es im Innenbereich der Transportstrecken erforderlich sein kann.

Unabhängig von der konkreten Anordnung kann die Übergabestrecke als passives Element ausgebildet sein, d.h. beispielsweise als Gleitblech oder Rutsche, entlang derer die Behältnisse nicht aktiv gefördert werden. Insbesondere, wenn die Übergabestrecke lang ausgeführt ist oder eine präzise und taktgenaue Förderung der Behältnisse gewünscht ist, kann es jedoch bevorzugt sein, ein Beförderungselement, beispielsweise ein Förderband oder eine Förderkette, an der Übergabestrecke vorzusehen, sodass die Behältnisse auch im Bereich der Übergabestrecke durch das Beförderungselement aktiv angetrieben von der ersten zur zweiten Transportstrecke bewegt werden können.

In einer weiter bevorzugten Ausführungsform erstreckt sich die Übergabestrecke bezogen auf die erste Maschinenachse und/oder zweite Maschinenachse von der Einlaufebene und der Auslaufebene beabstandet, insbesondere oberhalb der Einlaufebene und der Auslaufebene liegend. Weiter bevorzugt kann sich die Übergabestrecke in einer zur Einlaufebene und zur Auslaufebene parallelen, insbesondere horizontalen, Übergabeebene erstrecken.

Folglich werden die Behältnisse in dieser Ausführungsform beispielsweise entlang der ersten Transportstrecke von der Einlaufebene nach oben zur Übergabeebene gefördert. Anschließend werden die Behältnisse von der Übergabeebene nach unten zur Auslaufebene gefördert. Somit wird der zur Verfügung stehende Raum effizient genutzt, um eine möglichst lange Transportstrecke, und damit eine möglichst große Pufferzone zur Bevorratung der Behältnisse im Wendelförderer bereitzustellen.

In einer bevorzugten Ausführungsform sind die erste Transportstrecke und die zweite Transportstrecke derart orientiert und die Übergabestrecke derart zwischen dem zweiten Ende der ersten Transportstrecke und dem ersten Ende der zweiten Transportstrecke angeordnet, dass die Bewegungsrichtung der auf der Transportstrecke anordenbaren Behältnisse entlang der ersten Transportstrecke bezogen auf die Längsrichtung der ersten Maschinenachse entgegengesetzt zur Bewegungsrichtung der auf der Transportstrecke anordenbaren Behältnisse entlang der zweiten Transportstrecke ist.

Beispielsweise können die Behältnisse zunächst nach oben, d.h. aufwärts, und anschließend nach unten, d.h. abwärts, befördert werden, oder umgekehrt. So wird in dem Fall, dass die Behältnisse keine Höhendifferenz überwinden sollen, der für einen Wendelförderer zur Verfügung stehende Platz besonders effizient ausgenutzt und es wird eine umfassende Pufferung der Behältnisse bereitgestellt.

Bevorzugt sind die erste Maschinenachse und/oder die zweite Maschinenachse oder die gemeinsame Maschinenachse lotrecht zur Einlaufebene und/oder zur Auslaufebene ausgebildet. Ein derartig ausgestalteter Wendelförderer kann besonders gut in eine bestehende Produktionslinie integriert werden, insbesondere können so beispielsweise die Schnittstellen zu Förderbändern, die Behältnisse zum Behältniseinlauf befördern und vom Behältnisauslauf übernehmen, beibehalten werden.

Bevorzugt weisen die erste Transportstrecke und die zweite Transportstrecke die gleiche Wendelsteigung auf. So können besonders einfach Synergieeffekte zwischen den Transportstrecken ausgenutzt werden. Beispielsweise können gemeinsame Führungsschienen vorgesehen sein und/oder eine gemeinsamen Aufnahme im Maschinenrahmen des Wendelförderers.

Die erfindungsgemäß vorgesehene Steuereinheit kann beispielsweise dazu ausgebildet sein, den ersten Antrieb und den zweiten Antrieb derart zu steuern, dass zu befördernde Behältnisse am Behältnisauslauf mit einer gleichbleibenden Teilung bereitgestellt werden.

Bevorzugt kann das Fördersystem zumindest eine dritte Sensoreinrichtung aufweisen, die zum redundanten Überprüfen der von der ersten Sensoreinrichtung und/oder der zweiten Sensoreinrichtung erkannten Anzahl und Bewegungsrichtung der Behältnisse ausgebildet ist. Weiter bevorzugt kann die dritte Sensoreinrichtung im Bereich der Übergabestrecke angeordnet sein.

Durch die redundante Bereitstellung des die erkannte Anzahl und Bewegungsrichtung der Behältnisse angebenden Signals stellt die dritte Sensoreinrichtung eine Möglichkeit bereit, Fehler beim Betrieb des Fördersystems, wie beispielsweise ein Verkeilen der Behältnisse beim Transport durch die erste und/oder die zweite Transportstrecke zu erkennen, und so die Sicherheit beim Betrieb eines Fördersystems zu verbessern.

Die erste und/oder die zweite und/oder die dritte Sensorvorrichtung können beispielsweise als Lichtschranken ausgebildet sein, die dazu ausgebildet sind, das Passieren von Behältnissen zu erkennen und ein Zählelement basierend darauf zu inkrementieren. Alternativ kann das Erkennen eines Behältnisses und das Erkennen der Bewegungsrichtung des Behältnisses als Signal an die Steuereinheit übermittelt werden, die zum Zählen der Behältnisse ausgebildet sein kann.

Durch die beschriebene Ausbildung und Anordnung der Sensorvorrichtungen kann zu jeder Zeit eine Bilanzierung der im Wendelförderer befindlichen Behältnisse durchgeführt werden.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: in schematischer Darstellung eine erste Ausführungsform eines Fördersystems in perspektivischer Ansicht;
- Fig. 2: in schematischer Darstellung das Fördersystem gemäß Fig. 1 in Seitenansicht;
- Fig. 3: in schematischer Darstellung das Fördersystem gemäß Fig. 1 in Draufsicht;
- Fig. 4: in schematischer Darstellung eine zweite Ausführungsform eines Fördersystems in Seitenansicht;
- Fig. 5: in schematischer Darstellung das Fördersystem gemäß Fig. 4 in Draufsicht;
- Fig. 6: in schematischer Darstellung eine dritte Ausführungsform eines Fördersystems in perspektivischer Ansicht.

### Wege zur Ausführung der Erfindung

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur als schematische Ansicht zur Erläuterung der Arbeitsweise dargestellt. Insbesondere dienen die Darstellungen in den Figuren nur der Erläuterung des grundlegenden Prinzips der Erfindung. Aus Gründen der Übersichtlichkeit ist darauf verzichtet worden, alle Bestandteile der Vorrichtung zu zeigen.

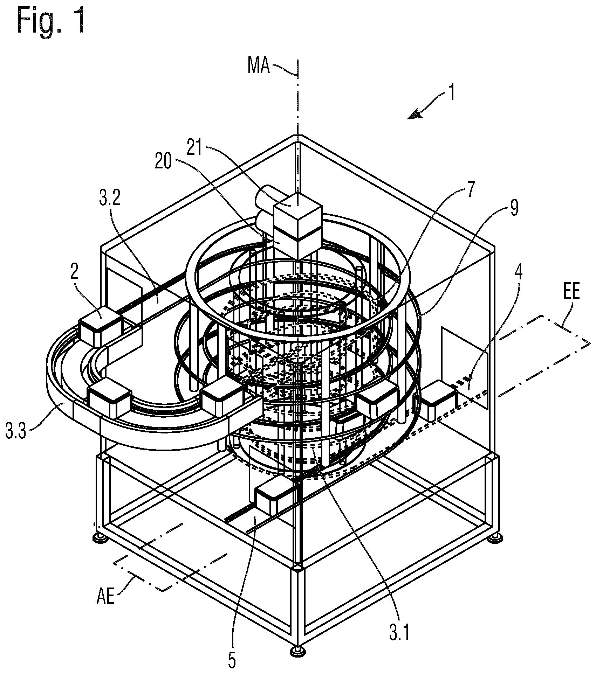

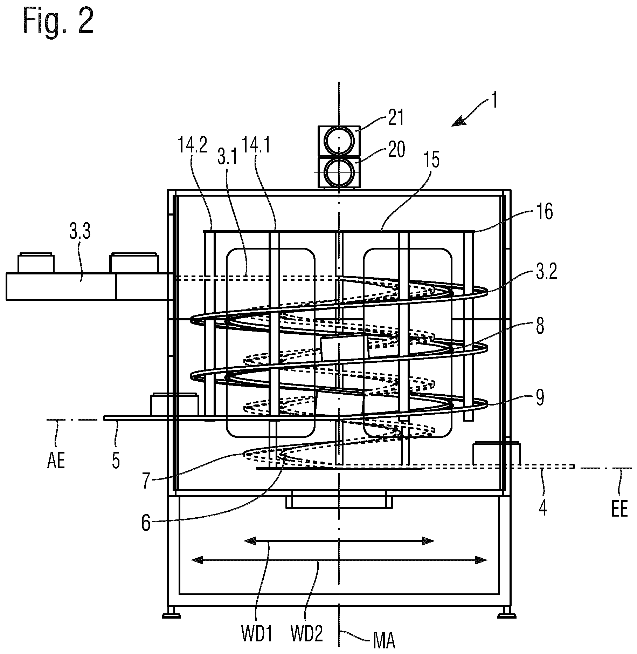

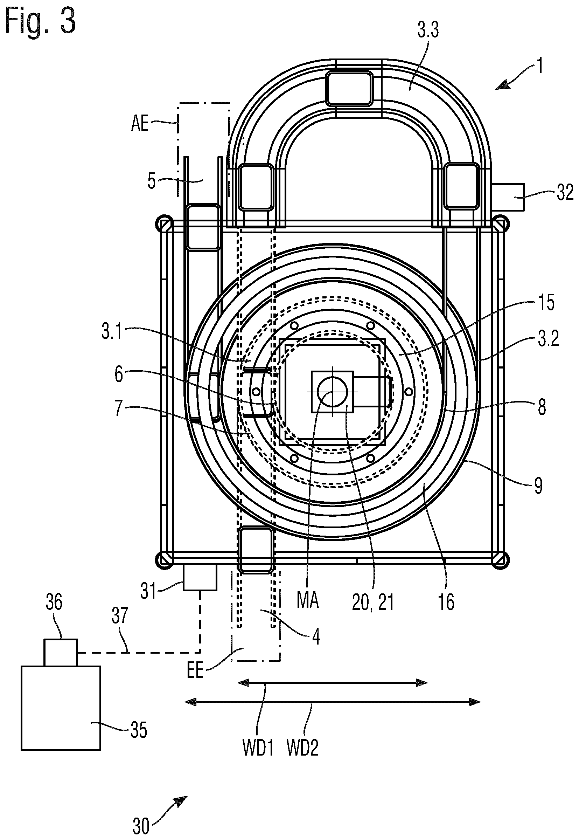

Die Figuren 1 bis 3 zeigen in schematischer Darstellung eine erste Ausführungsform eines Fördersystems mit einem Wendelförderer 1. Dabei ist in Figur 1 eine perspektivische Ansicht dargestellt. Figur 2 zeigt eine Seitenansicht und Figur 3 eine Draufsicht des in dem Fördersystem eingesetzten Wendelförderers 1.

Der Wendelförderer 1 dient zum Befördern und zum Speichern von Behältnissen 2. Die Behältnisse 2 sind quaderförmig ausgebildet, und können insbesondere als Transportkisten oder Getränkekästen ausgestaltet sein, wie sie häufig zum Transport und zur Lagerung von Lebensmitteln oder Getränkebehältern eingesetzt werden.

Die Behältnisse 2 werden dem Wendelförderer 1 an einem Behältniseinlauf 4 zugeführt. Die Zuführung der Behältnisse 2 kann beispielsweise über ein Transportelement, das vor dem Behältniseinlauf 4 angeordnet ist, erfolgen. Das Transportelement kann beispielsweise als Förderband ausgestaltet sein. Der Behältniseinlauf 4 ist in einer Einlaufebene EE angeordnet, die sich in der dargestellten Ausführungsform im Wesentlichen horizontal, d.h. im Wesentlichen parallel zu einer Aufstellfläche des Wendelförderers 1, erstreckt.

Vom Behältniseinlauf 4 weg erstreckt sich die Transportstrecke, welche eine erste Transportstrecke 3.1, eine zweite Transportstrecke 3.2 und eine Übergabestrecke 3.3 aufweist. Die erste Transportstrecke 3.1 und die zweite Transportstrecke 3.2 winden sich in der in den Figuren 1 bis 3 dargestellten Ausführungsvariante spiral- oder wendelartig um eine gemeinsame Maschinenachse MA. Die Maschinenachse MA erstreckt sich in der dargestellten Ausführungsform im Wesentlichen lotrecht zur Einlaufebene EE, d.h. in vertikaler Richtung.

Die erste Transportstrecke 3.1 weist einen ersten Wendeldurchmesser WD1 auf. Die zweite Transportstrecke 3.2 weist einen zweiten Wendeldurchmesser WD2 auf. Der zweite Wendeldurchmesser WD2 ist im Vergleich zum ersten Wendeldurchmesser WD1 größer, sodass die zweite Transportstrecke 3.2 in radialer Richtung außenliegend zur ersten Transportstrecke 3.1 angeordnet ist. In anderen Worten umfasst die zweite Transportstrecke 3.2 die erste Transportstrecke 3.1 zumindest teilweise.

Die erste Transportstrecke 3.1 weist ein erstes Ende und ein zweites Ende auf. Die zweite Transportstrecke 3.2 weist ein erstes Ende und ein zweites Ende 3.22 auf. Das erste Ende der ersten Transportstrecke 3.1 ist am Behältniseinlauf 4 angeordnet, sodass Behältnisse 2, die dem Wendelförderer 1 über den Behältniseinlauf 4 zugeführt werden, das erste Ende der ersten Transportstrecke 3.1 passieren und in die erste Transportstrecke 3.1 gelangen.

Auf der dem Behältniseinlauf 4 gegenüberliegenden Seite des Wendelförderers 1 ist ein Behältnisauslauf 5 in einer Auslassebene AE angeordnet. Behältnisse 2, die im Wendelförderer 1 befördert oder gespeichert werden, werden über den Behältnisauslauf 5 an nachfolgende Stationen einer Behandlungsstraße oder einer Produktionslinie bereitgestellt. Hierfür kann außerhalb des Wendelförderers 1 an den Behältnisauslauf 5 angrenzend ein Transportelement, insbesondere ein Förderband, bereitgestellt sein, das zum Abtransport der bereitgestellten Behältnisse geeignet ist.

Zwar sind der Behältniseinlauf 4 und Behältnisauslauf 5 in der dargestellten Ausführungsform gegenüberliegend am Wendelförderer 1 angeordnet, es kann aber auch eine andere Anordnung des Behältniseinlauf 4 und des Behältnisauslauf 5 vorgesehen sein. Beispielsweise können der Behältniseinlauf 4 und der Behältnisauslauf 5 an der gleichen Seitenfläche des Wendelförderers 1 angeordnet sein, oder an benachbarten Seitenflächen. Daneben kann, wie bereits ausführlich erläutert, der Behältniseinlauf 4 auch als Behältnisauslauf dienen und der Behältnisauslauf 5 kann auch als Behältniseinlauf fungieren.

Auch die Anordnung der Einlaufebene EE bezüglich der Auslaufebene AE ist im Wesentlichen frei wählbar und hängt insbesondere davon ab, ob von den im Wendelförderer 1 transportierten Behältnissen 2 eine Höhendifferenz überbrückt werden soll oder ob die Behältnisse 2 in der gleichen Ebene bereitgestellt werden sollen wie sie an den Wendelförderer 1 übergeben werden. In der dargestellten Ausführungsvariante weisen die Einlaufebene EE und die Auslaufebene AE einen insbesondere vertikalen Abstand zueinander auf, sodass die Auslaufebene AE im Vergleich zur Einlaufebene höher angeordnet ist.

Das zweite Ende 3.22 der zweiten Transportstrecke 3.2 ist unmittelbar an den Behältnisauslauf 5 angrenzend angeordnet, sodass Behältnisse 2 nach dem Befördern durch die zweite Transportstrecke 3.2 am Behältnisauslauf 5 bereitgestellt werden.

Zwischen der ersten Transportstrecke 3.1 und der zweiten Transportstrecke 3.2 ist eine Übergabestrecke 3.3 vorgesehen. Die Übergabestrecke 3.3 verbindet das zweite Ende der ersten Transportstrecke 3.1 mit dem ersten Ende der zweiten Transportstrecke 3.2. Die Übergabestrecke 3.3 erstreckt sich im Wesentlichen in einer zur Einlaufebene EE und zur Auslaufebene AE parallelen Ebene.

Sowohl die erste Transportstrecke 3.1 als auch die zweite Transportstrecke 3.2 weisen Behältnisführungen 6, 7, 8, 9 auf, die die Bahn der Behältnisse 2 begrenzen und die Bewegung der Behältnisse 2 lenken, wenn die Behältnisse 2 entlang der ersten Transportstrecke 3.1 und/oder entlang der zweiten Transportstrecke 3.2 bewegt werden. Die erste Transportstrecke 3.1 weist eine innenliegende Behältnisführung 6 auf, die die Beweglichkeit der Behältnisse 2 in radialer Richtung nach innen vorgibt. Die außenliegende Behältnisführung 7 der ersten Transportstrecke 3.1 begrenzt die Beweglichkeit der Behältnisse in radialer Richtung nach außen, sodass die Behältnisse 2 lediglich in Umfangsrichtung der Wendel der ersten Transportstrecke 3.1 bewegbar sind. Die zweite Transportstrecke 3.2 weist diesbezüglich einen ähnlichen Aufbau wie die erste Transportstrecke 3.1 auf. Insbesondere weist die zweite Transportstrecke 3.2 eine innenliegende Behältnisführung 8 sowie eine außenliegende Behältnisführung 9 auf.

Die Übergabestrecke 3.3 erstreckt sich zumindest teilweise außerhalb des Zylindermantels, der von der außenliegenden Behältnisführung 9 der zweiten Transportstrecke 3.2 definiert wird. So wird ein einfacher Aufbau des Wendelförderers 1 realisiert. Insbesondere besteht bei der Gestaltung der Übergabestrecke 3.3 große Freiheit, beispielsweise, weil die Länge der Übergabestrecke 3.3 anpassbar ist, ohne den ersten Wendeldurchmesser WD1 der ersten Transportstrecke 3.1 oder den zweiten Wendeldurchmesser WD2 der zweiten Transportstrecke 3.2 zu variieren. Die Übergabestrecke 3.3 weist einen im Wesentlichen bogenförmigen Verlauf auf, sodass die aus dem zweiten Ende der ersten Transportstrecke 3.1 austretenden Behältnisse 2 nach dem Transport entlang der Übergabestrecke 3.3 in umgekehrter Bewegungsrichtung am ersten Ende der zweiten Transportstrecke 3.2 eingespeist werden.

Die Behältnisse 2 bewegen sich in Draufsicht betrachtet entlang der ersten Transportstrecke 3.1 im Uhrzeigersinn, wobei sich die Behältnisse 2 bei einer Bewegung im Uhrzeigersinn nach oben schrauben. Entlang der zweiten Transportstrecke 3.2 sind die Behältnisse 2 in Draufsicht betrachtet ebenfalls im Uhrzeigersinn bewegbar, wobei sich die Behältnisse 2 bei einer Bewegung im Uhrzeigersinn nach unten schrauben.

Besonders vorteilhaft an dieser Anordnung der ersten Transportstrecke 3.1, der Übergabestrecke 3.3 und der zweiten Transportstrecke 3.2 ist, dass sich die Bewegungsrichtung der Behältnisse 2 durch den Wendelförderer 1 einfach umkehren lässt, beispielsweise wenn aufgrund eines Fehlers in einer Anlage ein Rückwärtsfahrbetrieb durchgeführt werden muss. So können beispielsweise Behältnisse 2, die über den Behältnisauslauf 5 zugeführt werden, entlang der zweiten Transportstrecke 3.2 aus der Draufsicht betrachtet entgegen dem Uhrzeigersinn nach oben zur Übergabestrecke 3.3 befördert werden. Von der Übergabestrecke 3.3 können die Behältnisse 2 dann entlang der ersten Transportstrecke 3.1 aus der Draufsicht betrachtet entgegen dem Uhrzeigersinn nach unten zum Behältniseinlauf 4 befördert werden.

Um die Behältnisse 2 entlang der ersten Transportstrecke 3.1 und entlang der zweiten Transportstrecke 3.2 zu bewegen, weist der Wendelförderer 1 einen ersten Antrieb 20 und einen zweiten Antrieb 21 auf. Der erste Antrieb 20 ist unabhängig vom zweiten Antrieb 21 steuerbar und betreibbar, sodass die Bewegung der Behältnisse 2 in der ersten Transportstrecke 3.1 unabhängig von der Bewegung der Behältnisse 2 in der zweiten Transportstrecke 3.2 vorgebbar ist.

Der erste Antrieb 20 kann grundsätzlich beliebig ausgestaltet sein, solange mittels des ersten Antriebs 20 Behältnisse 2 entlang der ersten Transportstrecke 3.1 bewegbar sind, indem der erste Antrieb 20 die ersten Mitnehmer 14.1 antreibt, welche dann in Wirkverbindung mit den Behältnissen 2 treten. Ebenso kann der zweite Antrieb 21 grundsätzlich beliebig ausgestaltet sein, solange mittels des zweiten Antriebs 21 die zweiten Mitnehmer 14.2 angetrieben werden, diese dann mit den Behältnissen 2 in Wirkverbindung treten und die Behältnisse 2 entlang der zweiten Transportstrecke 3.2 bewegen.

Wie am besten aus Figur 2 ersichtlich ist, erstrecken sich die ersten Mitnehmer 14.1 und die zweiten Mitnehmer 14.2 von einem Mitnehmertragelement 15, 16 im Wesentlichen in Längsrichtung der Maschinenachse MA, d.h. parallel zu Maschinenachse MA. Dabei durchgreifen die Mitnehmer 14.1 und 14.2 die jeweiligen Transportstrecken 3.1, 3.2 zwischen der innenliegenden Behältnisführung 6, 8 und der außenliegenden Behältnisführung 7, 9.

Die ersten Mitnehmer 14.1 und die zweiten Mitnehmer 14.2 sind um die gemeinsame Maschinenachse MA drehbar ausgeführt. Beispielsweise kann das jeweilige Mitnehmertragelement 15, 16, von dem die ersten Mitnehmer 14.1 und die zweiten Mitnehmer 14.2 hervorragen, um die Maschinenachse MA drehbar am Wendelförderer 1 abgestützt sein. Folglich sind die ersten Mitnehmer 14.1 und die zweiten Mitnehmer 14.2 in Umfangsrichtung der ersten Transportstrecke 3.1 und der zweiten Transportstrecke 3.2 bewegbar, wenn die Mitnehmertragelemente 15, 16 in Drehung versetzt werden.

Werden die Mitnehmertragelemente 15, 16 in Drehung versetzt, so treten die Mitnehmer 14.1 und 14.2 mit den Behältnissen 2 in Wirkverbindung und die Behältnisse 2 werden in Umfangsrichtung der Wendel bewegt, beispielsweise geschoben oder gezogen. Aufgrund der Steigung der Wendel wird dadurch nicht nur eine Bewegung der Behältnisse 2 in Umfangsrichtung hervorgerufen, sondern die Behältnisse 2 bewegen sich gleichzeitig nach oben oder unten, je nachdem, wie die Windungen der jeweiligen Transportstrecke 3.1, 3.2 orientiert sind und in welcher Richtung die Behältnisse 2 entlang der Transportstrecke 3.1, 3.2 bewegt werden.

Wie besonders aus Figur 2 ersichtlich ist, können die Mitnehmertragelemente 15, 16 in Längsrichtung der Maschinenachse MA beidseitig an den Mitnehmern 14.1, 14.2 angeordnet sein, d.h. oben und unten. Um die Übersichtlichkeit der Figur zu verbessern, sind lediglich die Mitnehmertragelemente 15 der ersten Mitnehmer 14.1 doppelseitig an den ersten Mitnehmern 14.1 dargestellt. Gleiches kann jedoch auch ohne Probleme für die Mitnehmer 14.2 umgesetzt werden.

Beispielsweise können der erste Antrieb 20 und/oder der zweite Antrieb 21 als Elektromotoren ausgestaltet sein und eine mechanische Verbindung zu den zugehörigen Mitnehmertragelementen 15, 16 aufweisen, sodass diese von den Elektromotoren in Drehung versetzt werden können. Elektromotoren haben den Vorteil, dass sie einfach zu- und abschaltbar sind und mittels einer Steuereinheit auf einfache Weise in ihrer Bewegung gesteuert und geregelt werden können.

Die Übergabestrecke 3.3 kann als passives Element ausgestaltet sein, d.h. sie ist in diesem Fall nicht geeignet, die Behältnisse 2 in Bewegung zu versetzen. Vielmehr können die Behältnisse 2 von dem ersten Antrieb 20 und/oder dem zweiten Antrieb 21 mit Hilfe der jeweiligen Mitnehmer 14.1, 14.2 in die Übergabestrecke 3.3 geschoben werden. Wenn die Behältnisse 2 eine ausreichende kinetische und/oder potentielle Energie aufweisen, können die Behältnisse 2 die Übergabestrecke 3.3 durchgleiten bis sie in Wirkverbindung mit dem jeweils anderen Mitnehmer 14.2, 14.1 treten. Wenn die kinetische und/oder potentielle Energie der Behältnisse 2 hierfür nicht ausreicht, so können die Behältnisse 2 in der Übergabestrecke 3.3 zum Stehen kommen. In diesem Fall kann es vorgesehen sein, dass die zur Ruhe gekommenen Behältnisse 2 durch nachfolgende Behältnisse 2, die noch mit dem ersten oder zweiten Mitnehmer 14.1, 14.2 in Wirkverbindung stehen, durch die Übergabestrecke 3.3 geschoben werden.

Durch Ausnutzung der eben beschriebenen Anwendungsfälle kann die Übergabestrecke 3.3 als Pufferzone zur Bevorratung von Behältnissen 2 genutzt werden. Wenn Behältnisse 2 am Behältnisauslauf 5 bereitgestellt werden sollen, beispielsweise aufgrund eines entsprechenden Bedarfssignals einer Anlagensteuerung, so können die gepufferten Behältnisse 2 durch die Übergabestrecke 3.3 geschoben werden, bis sie mit dem ersten oder zweiten Mitnehmer 14.1, 14.2 in Wirkverbindung treten und zum Behältnisauslauf 5 befördert werden können.

Bevorzugt wird der Wendelförderer 1 so betrieben, dass die Transportstrecke 3.1, 3.2, die am Behältnisauslauf 5 angeordnet ist, ständig mit Behältnissen 2 gefüllt ist. Im dargestellten Ausführungsbeispiel ist dies die zweite Transportstrecke 3.2. Um eine vollständige Befüllung der zweiten Transportstrecke 3.2 möglichst zu jeder Zeit zu garantieren, können in der Übergabestrecke 3.3 Behältnisse 2 bevorratet werden, von denen ein Behältnis 2 in die zweite Transportstrecke 3.2 eingespeist wird, wenn ein Behältnis 2 am Behältnisauslauf 5 aus dem Wendelförderer 1 ausläuft. Beispielsweise kann dies durch einen aufeinander abgestimmten Betrieb des ersten und zweiten Antriebs 20, 21 erfolgen, wobei die Behältnisse 2 vom ersten Mitnehmer 14.1 durch die Übergabestrecke 3.3 geschoben werden, insbesondere durch Schieben einer Reihe von aneinander anliegenden Behältnissen in der Übergabestrecke 3.3, und so an den zweiten Mitnehmer 14.2 bereitgestellt werden können.

In einer bevorzugten Ausführungsvariante kann sich somit folgende "Aufgabenteilung" zwischen dem ersten Antrieb 20 und dem zweiten Antrieb 21 ergeben: Der zweite Antrieb, dessen Aufgabe es ist, Behältnisse 2 bereitzustellen, wenn eine Anfrage einer Anlagensteuerung an den Wendelförderer 1 übermittelt wird, fördert Behältnisse 2 zum Behältnisauslauf 5 und stellt diese dort bereit. Damit die Behältnisse 2 mit einer gleichbleibenden Taktung, bzw. einem normierten Abstand zueinander bereitgestellt werden können, sorgt der erste Antrieb 20 im Zusammenspiel mit der Übergabestrecke 3.3 dafür, dass die zweite Transportstrecke 3.2, entlang derer die Behältnisse 2 bewegt werden, möglichst mit Behältnissen 2 gefüllt ist und keine Lücken zwischen den Behältnissen 2 auftreten. Der erste Antrieb kann die Aufgaben des zweiten Antriebs übernehmen, wenn die Transportstrecken 3.1, 3.2 anders angeordnet sind oder in umgekehrter Richtung von den Behältnissen durchlaufen werden.

Zusätzlich zum ersten Antrieb 20 und zum zweiten Antrieb 21 kann der Wendelförderer 1 einen dritten Antrieb aufweisen, mittels dem die Behältnisse 2 entlang der Übergabestrecke 3.3 bewegt werden können. Der dritte Antrieb kann beispielsweise als Förderband ausgestaltet sein, das sich entlang der Übergabestrecke 3.3 erstreckt und auf dem die Behältnisse 2 aufstehen, wenn sie entlang der Übergabestrecke 3.3 transportiert werden. Folglich kann der dritte Antrieb zur Unterstützung der Zuführung der Behältnisse 2 zur auslaufseitigen Transportstrecke 3.1, 3.2, hier der zweiten Transportstrecke 3.2, ausgebildet sein.

Das Fördersystem 30 weist neben dem Wendelförderer 1 eine Steuereinheit 35 auf. Aus Gründen der Übersichtlichkeit ist die Steuereinheit 35 lediglich in Figur 3 dargestellt. Das Fördersystem weist eine erste, im Bereich des Behältniseinlaufs 4 angeordnete Sensoreinrichtung 31 auf, die zum Erkennen einer Anzahl und einer Bewegungsrichtung der den Behältniseinlauf 4 passierenden Behältnisse 2 ausgebildet ist. Die Sensoreinrichtung 31 kann beispielsweise als Lichtschranke ausgebildet sein, die die Behältnisse 2, welche die Lichtschranke passieren, zählt, und die die Richtung ermittelt, in der die Behältnisse 2 die Lichtschranke passieren. Die Sensoreinrichtung 31 ist ferner dazu ausgebildet, ein Signal an die Signalschnittstelle 36 der Steuereinheit 35 des Fördersystems 30 zu übermitteln, das die erkannte Anzahl und die erkannte Bewegungsrichtung der den Behältniseinlauf 4 passierenden Behältnisse 2 repräsentiert. Die Übermittlung des Signals kann über einen Datenübertragungskanal 37 erfolgen und kabelgebunden oder kabellos erfolgen.

Das Fördersystem 30 weist außerdem eine zweite Sensoreinrichtung auf (nicht gezeigt). Die zweite Sensoreinrichtung ist am Behältnisauslauf 5 angeordnet und kann beispielsweise als Lichtschranke ausgebildet sein, die die Behältnisse 2, welche die Lichtschranke passieren, zählt, und die die Richtung ermittelt, in der die Behältnisse 2 die Lichtschranke passieren. Auch die zweite Sensoreinrichtung ist dazu ausgebildet, ein Signal an die Signalschnittstelle 36 der Steuereinheit 35 des Fördersystems 30 zu übermitteln, das die erkannte Anzahl und die erkannte Bewegungsrichtung der den Behältnisauslauf 5 passierenden Behältnisse 2 repräsentiert. Die Übermittlung des Signals kann über einen Datenübertragungskanal 37 erfolgen und kabelgebunden oder kabellos erfolgen. Durch die an die Steuereinheit 35 übermittelten Signale kann die Gesamtzahl an Behältnissen 2 in dem Fördersystem 30 festgestellt werden.

Zur Fehlervermeidung und zur Verbesserung der Betriebssicherheit weist das Fördersystem 30 ferner eine dritte Sensoreinrichtung 32 auf, die ebenfalls mit der Signalschnittstelle 36 der Steuereinheit 35 in Signalverbindung steht. Obwohl ein entsprechender Datenübertragungskanal 37 vorhanden sein kann, ist aus Gründen der Übersichtlichkeit in Figur 3 kein solcher Datenübertragungskanal 37 skizziert. Die dritte Sensoreinrichtung 32 kann ebenfalls als Lichtschranke ausgebildet sein und beispielsweise an der Übergabestrecke 3.3 angeordnet sein. Durch die Steuereinheit 35 kann das von der ersten Sensoreinrichtung 31 und/oder der zweiten Sensoreinrichtung übermittelte Signal mit dem von der dritten Sensoreinrichtung 32 übermittelten Signal verglichen werden, sodass etwaige Abweichungen, aus denen Rückschlüsse auf ein etwaiges Fehlverhalten des Fördersystems 30 abgeleitet werden können, erkannt werden.

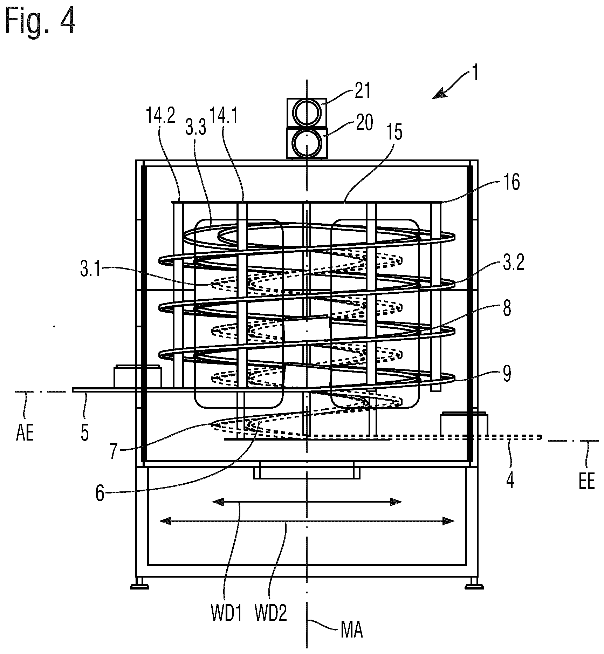

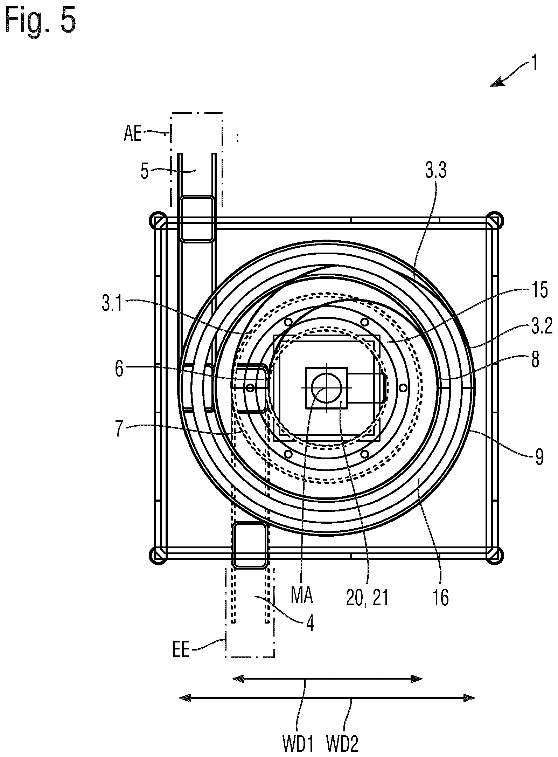

In den Figuren 4 und 5 ist eine zweite Ausführungsform eines Fördersystems 30 mit einem Wendelförderer 1 dargestellt, die zu großen Teilen der in den Figuren 1 bis 3 dargestellten ersten Ausführungsform entspricht. Zu Vermeidung von Wiederholungen wird deshalb auf eine Beschreibung der identischen Bestandteile verzichtet.

Die zweite Ausführungsform des Wendelförderers 1 des Fördersystems 30 zeichnet sich besonders dadurch aus, dass sich die Übergabestrecke 3.3 innerhalb eines von der außenliegenden Behältnisführung 9 der zweiten Transportstrecke 3.2 begrenzten Zylindermantels erstreckt. Das Ergebnis ist eine besonders platzsparende Konfiguration des Wendelförderers 1, der somit besonders leicht in bestehende Anlagen integrierbar ist.

Die Übergabestrecke 3.3 erstreckt sich vom zweiten Ende der ersten Transportstrecke 3.1, in dem sie die Krümmung der ersten Transportstrecke 3.1 fortsetzt. Anschließend erstreckt sich die Übergabestrecke 3.3 mit einem entlang der Ausdehnung der Übergabestrecke 3.3 zunehmenden Krümmungsradius in Form einer 180°-Kurve. Der Krümmungsradius der Übergabestrecke 3.3 nimmt solange zu, bis er dem Radius der Wendel der zweiten Transportstrecke 3.2 entspricht, sodass die Übergabestrecke 3.3 krümmungsstetig in die zweite Transportstrecke 3.2 übergeht.

Wie sowohl aus der in Figur 4 dargestellten Seitenansicht als auch aus der in Figur 5 dargestellten Draufsicht ersichtlich ist, ist es in der zweiten Ausführungsvariante erforderlich, dass die ersten Mitnehmer 14.1 und die zweiten Mitnehmer 14.2 die Übergabestrecke 3.3 kreuzen, um auf einer Kreisbahn um die Maschinenachse MA bewegbar zu sein. Hierfür kann die Übergabestrecke 3.3 geteilt ausgeführt sein, sodass die Übergabestrecke 3.3 Ausnehmungen an den Stellen aufweist, an denen die Mitnehmer 14.1 und 14.2 die Übergabestrecke 3.3 kreuzen.

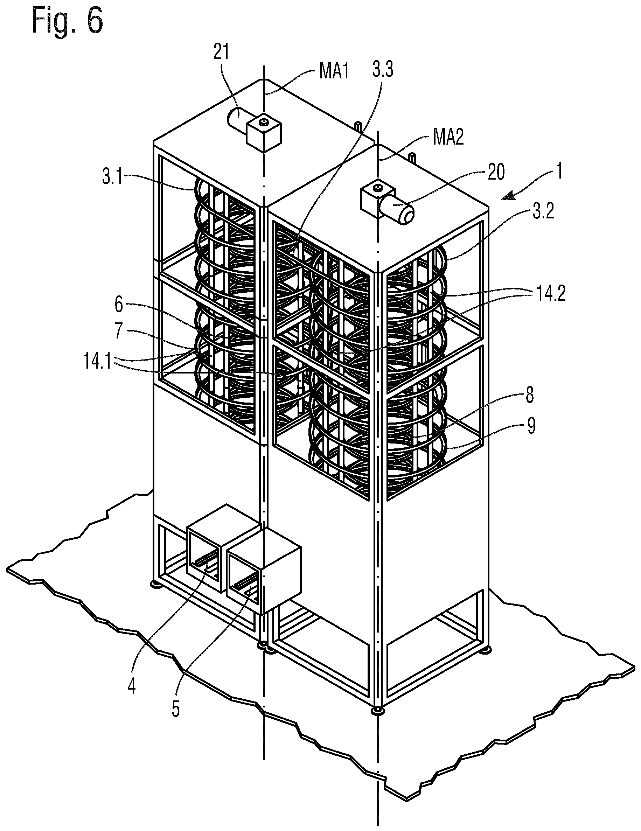

In Figur 6 ist eine dritte Ausführungsvariante eines Fördersystems 30 mit einem Wendelförderer 1 dargestellt. Der Wendelförderer 1 weist eine erste Transportstrecke 3.1 auf, die sich wendelartig um eine erste Maschinenachse MA1 windet. Seitlich zur ersten Maschinenachse MA1 versetzt, insbesondere parallel und parallelverschoben zur ersten Maschinenachse MA1, erstreckt sich eine zweite Maschinenachse MA2. Die zweite Maschinenachse MA2 ist von einer zweiten Transportstrecke 3.2 wendelartig umwunden.

Hierbei ist der Abstand zwischen der ersten Maschinenachse MA1 und der zweiten Maschinenachse MA2 insbesondere durch den ersten Wendeldurchmesser WD1 und den zweiten Wendeldurchmesser WD2 vorgegeben. Damit die außenliegende Behältnisführung 7 der ersten Transportstrecke 3.1 sich nicht mit der außenliegenden Behältnisführung 9 der zweiten Transportstrecke 3.2 überlappt, d.h. um zu vermeiden, dass die erste Transportstrecke 3.1 aus der Draufsicht betrachtet in die zweite Transportstrecke 3.2 hineinragt und umgekehrt, ist der Abstand der ersten Maschinenachse MA1 von der zweiten Maschinenachse MA2 größer als die Summe der Hälfte des ersten Wendeldurchmessers WD1 und der Hälfte des zweiten Wendeldurchmessers WD2. In anderen Worten ist der Abstand zwischen der ersten Maschinenachse MA1 und der zweiten Maschinenachse MA2 größer als die Summe der Radien der ersten Transportstrecke 3.1 und der zweiten Transportstrecke 3.2.

Die zwischen der ersten Transportstrecke 3.1 und der zweiten Transportstrecke 3.2 angeordnete Übergabestrecke 3.3 kann in der dargestellten Ausführungsvariante beliebig ausgeformt sein. Besonders vorteilhaft ist es jedoch, die Übergabestrecke 3.3 geradlinig auszuformen, weil dies einen besonders niedrigen Fertigungsaufwand und damit niedrige Fertigungskosten mit sich bringt. Zum niedrigen Fertigungsaufwand trägt weiter bei, dass die erste Transportstrecke 3.1 bei entsprechender Ausgestaltung und Anordnung der Übergabestrecke 3.3 spiegelsymmetrisch zur zweiten Transportstrecke 3.2 ausgeführt sein kann. Insbesondere kann die erste Transportstrecke 3.1 einen gleichen Wendeldurchmesser WD1 aufweisen wie die zweiten Transportstrecke 3.2. Durch die nebeneinanderstehende Anordnung der ersten und zweiten Transportstrecke 3.1, 3.2 ist außerdem das Innere der jeweiligen Transportstrecke 3.1, 3.2 einfach zugänglich, sodass dort gegebenenfalls Apparaturen oder Geräte ohne übermäßigen Aufwand installiert, gewartet und ausgetauscht werden können.

Die Ausführungen, die vorstehend zu dem ersten Antrieb 20, dem zweiten Antrieb 21 sowie dem dritten Antrieb gemacht wurden, sind auf die in Figur 6 dargestellte Ausführungsvariante übertragbar. Insbesondere bietet sich durch die voneinander beabstandete Anordnung der Transportstrecken 3.1, 3.2 eine große Gestaltungsfreiheit bei der Auswahl der Antriebe 20, 21.

### Bezugszeichenliste

- 1: Wendelförderer
- 2: Behältnisse
- 3: Transportstrecke
- 3.1: erste Transportstrecke
- 3.2: zweite Transportstrecke
- 3.3: Übergabestrecke
- 4: Behältniseinlauf
- 5: Behältnisauslauf
- 6, 8: innenliegende Behältnisführung
- 7, 9: außenliegende Behältnisführung

- 14.1: erster Mitnehmer
- 14.2: zweiter Mitnehmer
- 15, 16: Mitnehmertragelement

- 20: erster Antrieb
- 21: zweiter Antrieb

- 30: Fördersystem
- 31: erste Sensoreinrichtung
- 32: dritte Sensoreinrichtung
- 35: Steuereinheit
- 36: Signalschnittstelle
- 37: Datenübertragungskanal

- AE: Auslaufebene
- EE: Einlaufebene
- MA: gemeinsame Maschinenachse
- MA1: erste Maschinenachse
- MA2: zweite Maschinenachse
- WD1, WD2: Wendeldurchmesser

## Patentansprüche

1. Fördersystem (30) umfassend
- einen Wendelförderer (1) zum Befördern von Behältnissen (2) entlang einer sich zwischen einem in einer Einlaufebene (EE) angeordneten Behältniseinlauf (4) und einem in einer Auslaufebene (AE) angeordneten Behältnisauslauf (5) erstreckenden Transportstrecke, wobei die Transportstrecke zumindest aufweist:
- eine eine erste Maschinenachse (MA1) wendelartig umschließende erste Transportstrecke (3.1), wobei die erste Transportstrecke (3.1) einen ersten Wendeldurchmesser (WD1) aufweist und die erste Transportstrecke (3.1) ein erstes Ende und ein dem ersten Ende gegenüberliegendes zweites Ende aufweist,
- eine eine zweite Maschinenachse (MA2) wendelartig umschließende zweite Transportstrecke (3.2), wobei die zweite Transportstrecke (3.2) einen zweiten Wendeldurchmesser (WD2) aufweist und die zweite Transportstrecke (3.2) ein erstes Ende und ein dem ersten Ende gegenüberliegendes zweites Ende aufweist,
- wobei die zweite Maschinenachse (MA2) zur ersten Maschinenachse (MA1) im Wesentlichen parallel ausgerichtet ist,
- eine Übergabestrecke (3.3), wobei die Übergabestrecke (3.3) sich zwischen der ersten Transportstrecke (3.1) und der zweiten Transportstrecke (3.2) erstreckt,
- zumindest einen ersten Mitnehmer (14.1), wobei der erste Mitnehmer (14.1) mit den auf der ersten Transportstrecke (3.1) anordenbaren Behältnissen (2) in Wirkverbindung bringbar ist,
- zumindest einen zweiten Mitnehmer (14.2), wobei der zweite Mitnehmer (14.2) mit den auf der zweiten Transportstrecke (3.2) anordenbaren Behältnissen (2) in Wirkverbindung bringbar ist,
- wobei die erste Transportstrecke (3.1) zumindest eine bezogen auf die erste Maschinenachse (MA1) innenliegende Behältnisführung (6) und zumindest eine bezogen auf die erste Maschinenachse (MA1) außenliegende Behältnisführung (7) aufweist,
- wobei die zweite Transportstrecke (3.2) zumindest eine bezogen auf die zweite Maschinenachse (MA2) innenliegende Behältnisführung (8) und zumindest eine bezogen auf die zweite Maschinenachse (MA2) außenliegende Behältnisführung (9) aufweist,
- wobei der erste Mitnehmer (14.1) die erste Transportstrecke (3.1) und der zweite Mitnehmer (14.2) die zweite Transportstrecke (3.2) zwischen den jeweiligen Behältnisführungen (6, 7, 8, 9) durchgreift,
- zumindest einen ersten Antrieb (20) zum Befördern von Behältnissen (2) entlang der ersten Transportstrecke (3.1), wobei der erste Mitnehmer (14.1) mittels des ersten Antriebs (20) antreibbar ausgebildet ist,
- zumindest einen zweiten Antrieb (21) zum Befördern von Behältnissen (2) entlang der zweiten Transportstrecke (3.2), wobei der zweite Mitnehmer (14.2) mittels des zweiten Antriebs (21) antreibbar ausgebildet ist,
- wobei der erste Antrieb (20) und der zweite Antrieb (21) unabhängig voneinander betreibbar sind,
- eine erste, im Bereich des Behältniseinlaufs (4) angeordnete Sensoreinrichtung (31), wobei die erste Sensoreinrichtung (31) ausgebildet ist zum Erkennen einer Anzahl und einer Bewegungsrichtung der den Behältniseinlauf (4) passierenden Behältnisse (2), und zum Senden eines Signals, wobei das Signal die erkannte Anzahl und die erkannte Bewegungsrichtung der den Behältniseinlauf (4) passierenden Behältnisse (2) repräsentiert,
- eine zweite, im Bereich des Behältnisauslaufs (5) angeordnete Sensoreinrichtung, wobei die zweite Sensoreinrichtung ausgebildet ist zum Erkennen einer Anzahl und einer Bewegungsrichtung der den Behältnisauslauf (5) passierenden Behältnisse (2), und zum Senden eines Signals, wobei das Signal die erkannte Anzahl und die erkannte Bewegungsrichtung der den Behältnisauslauf (5) passierenden Behältnisse (2) repräsentiert,
- eine eine Signalschnittstelle (36) aufweisende Steuereinheit (35),
wobei die erste Sensoreinrichtung (31) und die zweite Sensoreinrichtung mit der Signalschnittstelle (36) in Signalverbindung steht und die Steuereinheit (35) dazu ausgebildet ist, den ersten Antrieb (20) und den zweiten Antrieb (21) unabhängig voneinander, basierend auf dem von der ersten Sensoreinrichtung (31) und der zweiten Sensoreinrichtung übermittelten Signal und basierend auf einem von einer Anlagensteuerung übermittelten Bedarfssignal zu steuern.

2. Fördersystem (30) nach Anspruch 1, **dadurch gekennzeichnet, dass** die erste Maschinenachse (MA1) zur zweiten Maschinenachse (MA2) derart parallelverschoben ist, dass ein Abstand zwischen der ersten Maschinenachse (MA1) und der zweiten Maschinenachse (MA2) zumindest gleich der Summe aus dem halben ersten Wendeldurchmesser (WD1) der ersten Transportstrecke (3.1) und dem halben zweiten Wendeldurchmesser (WD2) der zweiten Transportstrecke (3.2) ist.

3. Fördersystem (30) nach Anspruch 1, **dadurch gekennzeichnet, dass** die erste Maschinenachse (MA1) und die zweite Maschinenachse (MA2) eine gemeinsame Maschinenachse (MA) bilden, wobei der erste Wendeldurchmesser (WD1) kleiner als der zweite Wendeldurchmesser (WD2) ist, sodass die erste Transportstrecke (3.1) und die zweite Transportstrecke (3.2) bezogen auf die gemeinsame Maschinenachse (MA) in radialer Richtung versetzt zueinander angeordnet sind.

4. Fördersystem (30) nach Anspruch 3, **dadurch gekennzeichnet, dass** die außenliegende Behältnisführung (7) der ersten Transportstrecke (3.1) der innenliegenden Behältnisführung (8) der zweiten Transportstrecke (3.2) entspricht.

5. Fördersystem (30) nach einem der Ansprüche 3 oder 4, **dadurch gekennzeichnet, dass** sich die Übergabestrecke (3.3) bezogen auf die gemeinsame Maschinenachse (MA) radial innerhalb eines von der außenliegenden Behältnisführung (9) der zweiten Transportstrecke (3.2) definierten Zylindermantels erstreckt.

6. Fördersystem (30) nach einem der Ansprüche 3 oder 4, **dadurch gekennzeichnet, dass** sich die Übergabestrecke (3.3) bezogen auf die gemeinsame Maschinenachse (MA) zumindest teilweise radial außerhalb eines von der außenliegenden Behältnisführung (9) der zweiten Transportstrecke (3.2) definierten Zylindermantels erstreckt.

7. Fördersystem (30) nach einem der vorhergehenden Ansprüche, **dadurch gekennzeichnet, dass** die Übergabestrecke (3.3) sich bezogen auf die erste Maschinenachse (MA1) und/oder bezogen auf die zweite Maschinenachse (MA2) zumindest teilweise in radialer Richtung erstreckt.

8. Fördersystem (30) nach einem der vorhergehenden Ansprüche, **dadurch gekennzeichnet, dass** sich die Übergabestrecke (3.3) bezogen auf die erste Maschinenachse (MA1) und/oder bezogen auf die zweite Maschinenachse (MA2) von der Einlaufebene (EE) und der Auslaufebene (AE) beabstandet, insbesondere oberhalb der Einlaufebene (EE) und der Auslaufebene (AE) liegend, erstreckt.

9. Fördersystem (30) nach einem der vorhergehenden Ansprüche, **dadurch gekennzeichnet, dass** die erste Transportstrecke (3.1) und die zweite Transportstrecke (3.2) derart orientiert sind und die Übergabestrecke (3.3) derart zwischen dem zweiten Ende der ersten Transportstrecke (3.1) und dem ersten Ende der zweiten Transportstrecke (3.2) angeordnet ist, dass die Bewegungsrichtung der auf der Transportstrecke anordenbaren Behältnisse (2) entlang der ersten Transportstrecke (3.1) bezogen auf die Längsrichtung der ersten Maschinenachse (MA1) entgegengesetzt zur Bewegungsrichtung der auf der Transportstrecke anordenbaren Behältnisse (2) entlang der zweiten Transportstrecke (3.2) ist.

10. Fördersystem (30) nach einem der vorhergehenden Ansprüche, **dadurch gekennzeichnet, dass** die erste Maschinenachse (MA1) und/oder die zweite Maschinenachse (MA2) oder die gemeinsame Maschinenachse (MA) lotrecht zur Einlaufebene (EE) und/oder zur Auslaufebene (AE) ausgebildet ist.

11. Fördersystem (30) nach einem der vorhergehenden Ansprüche, **dadurch gekennzeichnet, dass** die erste Transportstrecke (3.1) und die zweite Transportstrecke (3.2) die gleiche Wendelsteigung aufweisen.

12. Fördersystem (30) nach einem der vorhergehenden Ansprüche, **dadurch gekennzeichnet, dass** das Fördersystem (30) zumindest eine dritte Sensoreinrichtung (32) aufweist, die zum redundanten Überprüfen der von der ersten Sensoreinrichtung (31) und/oder der zweiten Sensoreinrichtung erkannten Anzahl und Bewegungsrichtung der Behältnisse (2) ausgebildet ist.

13. Fördersystem (30) nach Anspruch 12, **dadurch gekennzeichnet, dass** die dritte Sensoreinrichtung (32) im Bereich der Übergabestrecke (3.3) angeordnet ist.
